(19) Europäisches Patentamt
European Patent Office
Office européen des brevets

(11) EP 2 410 784 B2

(12) **NEW EUROPEAN PATENT SPECIFICATION**
After opposition procedure

(45) Date of publication and mention of the opposition decision:
**15.02.2017 Bulletin 2017/07**

(45) Mention of the grant of the patent:
**25.12.2013 Bulletin 2013/52**

(21) Application number: **09841722.3**

(22) Date of filing: **20.03.2009**

(51) Int Cl.:
***H04W 24/10*** *(2009.01)* ***H04B 7/04*** *(2017.01)*
***H04B 7/06*** *(2006.01)*

(86) International application number:
**PCT/CN2009/070926**

(87) International publication number:
**WO 2010/105439 (23.09.2010 Gazette 2010/38)**

(54) **PRE-CODING CONTROL INDICATION INFORMATION RECEIVING AND FEEDBACK METHOD, AND THE COMMUNICATION DEVICE THEREOF**

VERFAHREN ZUM EMPFANGEN UND RÜCKKOPPELN VON VORKODIERTEN STEUERANZEIGEINFORMATIONEN UND KOMMUNIKATIONSVORRICHTUNG DAFÜR

PROCÉDÉ POUR RECEVOIR ET RENVOYER UNE INFORMATION D'INDICATION DE COMMANDE DE PRÉ-CODAGE ET SON DISPOSITIF DE COMMUNICATION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**25.01.2012 Bulletin 2012/04**

(73) Proprietor: **Huawei Technologies Co., Ltd.**
**Longgang District**
**Shenzhen, Guangdong 518129 (CN)**

(72) Inventors:
- **MA, Xueli**
  **Shenzhen**
  **Guangdong 518129 (CN)**
- **HAN, Chongyang**
  **Shenzhen**
  **Guangdong 518129 (CN)**
- **LI, Jing**
  **Shenzhen**
  **Guangdong 518129 (CN)**
- **WANG, Zongjie**
  **Shenzhen**
  **Guangdong 518129 (CN)**
- **YANG, Bo**
  **Shenzhen**
  **Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**WO-A2-2008/022243** **CN-A- 101 207 427**
**US-A1- 2007 002 963** **US-A1- 2008 232 449**
**US-A1- 2008 247 488**

- **"3rd Generation Partnership Project; Technical Specification Group Radio Access Network; Physical channels and mapping of transport channels onto physical channels (FDD) (Release 7)", 3GPP STANDARD; 3GPP TS 25.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.7.0, 1 March 2009 (2009-03-01), pages 1-54, XP050366710,**

## Description

### FIELD OF THE INVENTION

The present invention relates to the field of wireless network communications, and in particular, to a method and communication device for feeding back and receiving Pre-coding Control Indication (PCI) information.

### BACKGROUND OF THE INVENTION

With the rapid development of the communications technologies, Wideband Code Division Multiple Access (WCDMA), as one of the mainstream technologies in the third mobile communication system, is widely developed and applied all over the world. In the prior art, a Base Station (BS) uses PCI information fed back by a User Equipment (UE) to perform downlink Multiple-Input Multiple-Output (MIMO). A process of the downlink MIMO is briefly described as follows.

The BS generates weighting factors w1, w2, w3, and w4 according to the PCI information fed back by the UE. Specifically, W2 is mapped according to the received PCI, then w4=-w2, and $w1=w3=\frac{1}{\sqrt{2}}$ are obtained, where (w1, w2) is referred to as a primary pre-coding vector, and (w3, w4) is referred to as a secondary pre-coding vector.

1. A primary transmission block is weighted by using the primary pre-coding vector, and then sent on two antennas, where w1 is a weighting factor of the primary transmission block on an antenna 1, and W2 is a weighting factor of the primary transmission block on an antenna 2.

2. A secondary transmission block is weighted by using the secondary pre-coding vector, and then sent on two antennas, where w3 is a weighting factor of the secondary transmission block on the antenna 1, and W4 is a weighting factor of the secondary transmission block on the antenna 2.

At present, uplink direction in the WCDMA system has a single antenna. In order to further improve uplink transmission rate of the WCDMA system and decrease data transmission delay, the uplink direction also needs to carry data by using a multi-antenna technology, so as to achieve uplink MIMO. In addition, the WCDMA system may also use an uplink Closed Loop Transmit Diversity (CLTD) mode for transmission. Therefore, inventors of the present invention are fully aware that a method for a base station to feed back PCI information needs to be designed, so that a terminal can perform the uplink MIMO transmission or the CLTD transmission according to the PCI information fed back by the BS.

Document US 2007/0002963 A1 discloses a method for feeding back downlink MIMO pre-coding information.

### SUMMARY OF THE INVENTION

Aspects of the present invention provide a method and device for sending and receiving PCI information.

An aspect of the present invention provides a method for feeding back PCI information, and the method includes: carrying a code sequence, which represents PCI information, in a feedback channel of a BS when uplink MIMO transmission or uplink CLTD is performed, where a frame format of the feedback channel is the same as that of a 2 ms Enhanced Dedicated Channel (E-DCH) Hybrid ARQ Indicator Channel (EHICH) or a 2ms E-DCH Relative Grant Channel (ERGCH), or the same as that of a Fractional Dedicated Physical Channel (F-DPCH).

Another aspect of the present invention provides a BS, and the BS includes a carrying module, configured to carry a code sequence, which represents PCI information, in a feedback channel of the BS when uplink MIMO transmission or uplink CLTD transmission is performed, where a frame format of the feedback channel is the same as that of a 2ms EHICH or a 2ms ERGCH, or the same as that of an F-DPCH.

Further another aspect of the present invention provides a method for receiving PCI information at a terminal side, and the method includes: receiving a code sequence, which represents PCI information, fed back by a BS when uplink MIMO transmission or uplink CLTD transmission is performed, where a frame format of a feedback channel used by the BS is the same as that of a 2 ms EHICH or a 2ms ERGCH, or the same as that of an F-DPCH; and acquiring the PCI information according to the code sequence.

Still further another aspect of the present invention provides a terminal, and the terminal includes a receiving module, configured to receive a code sequence, which represents PCI information, fed back by a BS when uplink MIMO transmission or uplink CLTD transmission is performed, where a frame format of a feedback channel used by the BS is the same as that of a 2 ms EHICH or a 2ms ERGCH, or the same as that of an F-DPCH; and a mapping module, configured to acquire the PCI information according to the code sequence.

Aspects of the present invention have the following beneficial effects. In the solutions according to the aspects of the present invention, the feedback channel, which has the same frame format as that which has the same frame format as that of a 2ms EHICH or a 2ms ERGCH or has the same frame format as that of an F-DPCH, is used to carry the PCI information, so that the terminal can implement uplink MIMO transmission or perform uplink CLTD transmission according to the PCI information, thereby maximizing block length supported by existing channel conditions, and improving the uplink transmission rate.

## BRIEF DESCRIPTION OF THE DRAWINGS

The accompanying drawings described herein provide a further understanding of the invention, constitute a part of this application, are not intended to limit the present invention, where

FIG 1 is a flow chart of a method for feeding back PCI information according to an embodiment of the present invention;

FIG. 2 is a schematic diagram of an orthogonal signature sequence used by a PCI Channel (PCICH) according to an embodiment of the present invention;

FIG. 3 is a schematic diagram of an $i^{th}$ slot index of a PCICH according to an embodiment of the present invention;

FIG. 4 is a structure diagram of a BS for feeding back PCI information according to an embodiment of the present invention;

FIG. 5 is a flow chart of a method for receiving PCI information at a terminal side according to an embodiment of the present invention; and

FIG. 6 is a structure diagram of a terminal according to an embodiment of the present invention.

## DETAILED DESCRIPTION OF THE EMBODIMENTS

In order to make the objectives, technical solutions, and advantages of the present invention more comprehensible, the present invention is further described in detail below through embodiments with the accompanying drawings. Herein, the exemplary embodiments of the present invention and descriptions of the embodiments are only intended to explain the present invention, instead of limiting the present invention.

Embodiments of the present invention provide a method and device for sending and receiving PCI information in uplink MIMO transmission or uplink CLTD transmission. The present invention is described below in detail with reference to the accompanying drawings.

FIG. 1 is a flow chart of a method for feeding back PCI information according to an embodiment of the present invention.

Step 101: A code sequence, which represents PCI information, is carried in a feedback channel of a BS when uplink MIMO transmission or uplink CLTD transmission is performed.

Where PCI is a pre-coding vector fed back to a terminal, so as to enable the terminal to maximize block length supported by existing channel conditions.

As an embodiment of the present invention, the feedback channel may include a Pre-coding Control Indication Channel (PCICH). It can be understood by those skilled in the art that, to facilitate description, PCICH is a name defined for the feedback channel, and is not intended to limit the present invention.

In an embodiment of the present invention, a frame format of the PCICH may be the same as that of a 2ms Enhanced Dedicated Channel (E-DCH) Hybrid ARQ Indicator Channel (EHICH) or a 2ms E-DCH Relative Grant Channel (ERGCH), or the same as that of a Fractional Dedicated Physical Channel (F-DPCH).

In another embodiment of the present invention, if the frame format of the PCICH is the same as that of the 2ms EHICH or 2 ms ERGCH, the first two slots of the PCICH may be used to carry the code sequence.

In further another embodiment of the present invention, if the frame format of the PCICH is the same as that of the 2ms EHICH or a 2ms ERGCH, three slots of the PCICH may be used to carry the code sequence.

In still further another embodiment of the present invention, if the frame format of the PCICH is the same as that of the F-DPCH, a single slot of the PCICH may be used to carry the code sequence.

In still further another embodiment of the present invention, if the frame format of the PCICH is the same as that of the F-DPCH, two slots of the PCICH may be used to carry the code sequence.

Descriptions are made through embodiments below.

Embodiment 1: In this embodiment, a PCICH channel is a physical channel for feeding back PCI information, which has the same frame structure as that of a 2ms EHICH or ERGCH, and uses a signature (or a channelization code) to distinguish users. Sequences $b_{i,0}$, $b_{i,1}$, ..., $b_{i,39}$ transmitted in a slot i of the PCICH channel are defined by a formula $b_{i,j} = a_i C_{ss,40,\ m(i),j}$. Herein, the orthogonal signature sequence $C_{ss,40,\ m(i),j}$ and the index m(i) of the $i^{th}$ slot are determined as follows.

$C_{ss,40,\ m(i)}$ is as shown in FIG. 2, and the index m(i) of the $i^{th}$ slot is as shown in FIG. 3.

A specific method for selecting the orthogonal signature sequence includes: finding out a corresponding row in an index list (L) as shown in FIG. 3 according to a value of a signature sequence index L configured by an upper layer, then acquiring index m(i) values of different slots in the row according to the value of the slot i, and finding out a corresponding row in FIG. 2 according to the m(i) value, where a signature sequence represented by the row is the signature sequence used in the slot i.

The value of $a_i$ may vary in different slots, for example, may be 0, or 1.

Values of three slots of the PCICH channel are corresponding to three $a_i$, a code sequence formed by the three $a_i$ represents the PCI information, and a mapping relationship is shown in FIG. 1. The PCICH has only sub-frames of 2ms, each sub-frame includes three slots and can carry 3-bit PCI information, and the PCI information has four values (with respect to a terminal having two antennas). Therefore, a 3-bit code sequence can be used to represent the four values of the PCI. As for a terminal having more than two antennas, more bits may be used to represent PCI value information. Table 1 shows a mapping relationship between PCIs and code sequences.

**Table 1: Mapping Relationship Between PCI Values And Code Sequences**

| Code Sequence | PCI Value |
|---|---|
| 111 | 0 |
| 100 | 1 |
| 010 | 2 |
| 001 | 3 |

In another embodiment of the present invention, the mapping relationship between the code sequences and the PCI values may be: a PCI value 0 corresponding to a code sequence 000, a PCI value 1 corresponding to a code sequence 011, a PCI value 2 corresponding to a code sequence 101, and a PCI value 3 corresponding to a code sequence 110. Definitely, it can be understood by persons skilled in the art that, the mapping relationships listed above are only exemplary, and other different mapping manners also fall within the protection scope of the present invention.

Embodiment 2: The method of this embodiment is similar to Embodiment 1, and the difference is that only the first two slots of the PCICH are used to carry the code sequence representing the PCI information, and the third slot is reserved, that is, a 2-bit code sequence is used to represent four values of the PCI. An example of the mapping relationship is shown in Table 2, but other mapping relationships different from that in Table 2 also fall within the protection scope of the present invention.

**Table 2: Mapping Relationship Between PCI Values And Code Sequences**

| Code Sequence | PCI Value |
|---|---|
| 11 | 0 |
| 10 | 1 |
| 01 | 2 |
| 00 | 3 |

Embodiment 3 : In this embodiment, the frame format of the PCICH is the same as that of the F-DPCH.

In this embodiment, each slot of the PCICH carries 2-bit PCI information, and each slot feeds back one complete PCI information. For example, according to the mapping relationship in Table 2, 2-bit information is used to present different PCI values.

Embodiment 4: In this embodiment, the frame format of the PCICH is the same as that of the F-DPCH. In this embodiment, two PCICH slots carry a code sequence corresponding to one complete PCI information, where the first bit of the code sequence is carried in the first PCICH slot, the second bit of the code sequence is carried in the second PCICH slot, so that the two PCICH slots carry one complete PCI information.

FIG. 4 is a structure diagram of a BS for feeding back PCI information according to an embodiment of the present invention.

The BS includes a carrying module 401 configured to carry a code sequence, which represents PCI information, in a feedback channel of the BS when uplink MIMO transmission or uplink CLTD transmission is performed.

In an exemplary embodiment of the present invention, the feedback channel may include a PCICH. It can be understood by those skilled in the art that, to facilitate description, PCICH is a name defined for the feedback channel, and is not intended to limit the present invention.

In another exemplary embodiment of the present invention, a frame format of the PCICH may be the same as that of a 2ms EHICH or a 2ms ERGCH, or the same as that of an F-DPCH.

In further another exemplary embodiment of the present invention, if the frame format of the PCICH is the same as that of the 2ms EHICH or a 2ms ERGCH, the carrying module 401 may carry the code sequence in the first two slots of the PCICH.

In still further another exemplary embodiment of the present invention, if the frame format of the PCICH is the same as that of the 2ms EHICH or a 2ms ERGCH, the carrying module 401 may carry the code sequence in three slots of the PCICH.

In still further another exemplary embodiment of the present invention, if the frame format of the PCICH is the same as that of the F-DPCH, the carrying module 401 may carry the code sequence in a single slot of the PCICH.

In still further another exemplary embodiment of the present invention, if the frame format of the PCICH is the same as that of the F-DPCH, the carrying module 401 may carry the code sequence in two slots of the PCICH.

The detailed schemes for the carrying module 401 to carry the code sequence, which represents the PCI information, on the PCICH may be obtained with reference to the descriptions of the embodiments of the method for feeding back the PCI information, and is not further described in detail herein again.

FIG. 5 is a flow chart of a method for receiving PCI information at a terminal side according to an embodiment of the present invention.

Step 501: Receive a code sequence, which represents PCI information, fed back when uplink MIMO transmission or uplink CLTD transmission is performed.

Step 502: Acquire the PCI information according to the code sequence.

In an exemplary embodiment of the present invention, in step 501, if a frame format of the received PCICH is the same as that of a 2ms EHICH or a 2ms ERGCH, the code sequence may be acquired from first two slots of the PCICH; or the code sequence may be acquired from three slots of the PCICH.

In another exemplary embodiment of the present invention, in step 501, if the frame format of the received PCICH is the same as that of a F-DPCH, the code sequence may be acquired from a single slot of the PCICH; or one 1-bit PCI information is acquired from each of two slots of the PCICH, and then the two 1-bit PCI information are combined into the code sequence.

It can be understood by those skilled in the art that, to facilitate description, PCICH is a name defined for the feedback channel, and is not intended to limit the present invention.

In another exemplary embodiment of the present invention, after step 502, the method may further include acquiring a pre-coding weight $w_2^{pref}$ of a second antenna corresponding to the PCI information through Table 3.

**Table 3: Mapping Relationship Of PCI Values And Pre-coding Weights**

| $w_2^{pref}$ | **PCI Value** |
|---|---|
| $\frac{1+j}{2}$ | 0 |
| $\frac{1-j}{2}$ | 1 |
| $\frac{-1+j}{2}$ | 2 |
| $\frac{-1-j}{2}$ | 3 |

In Table 3, j is a complex number.

A weighting factor $w_1^{pref}$ of a first antenna is a constant, and the $w_1^{pref}$ and the $w_2^{pref}$ form a primary pre-coding vector $\left(w_1^{pref}, w_2^{pref}\right)$. An optional secondary pre-coding vector is a unique determination function of the primary pre-coding vector, so the terminal can achieve the communication in uplink MIMO mode through the primary pre-coding vector and the secondary pre-coding vector.

FIG. 6 is a structure diagram of a terminal according to an embodiment of the present invention.

The terminal includes a receiving module 601 configured to receive a code sequence, which represents PCI information, fed back in uplink MIMO transmission or uplink CLTD transmission; and a mapping module 602, configured to acquire the PCI information according to the code sequence.

In an exemplary embodiment of the present invention, if the frame format of the PCICH received by the receiving module 601 is the same as that of a 2ms EHICH or a 2ms ERGCH, the mapping module 602 may acquire the code sequence from first two slots of the PCICH or acquire the code sequence from three slots of the PCICH.

In another exemplary embodiment of the present invention, if the frame format of the PCICH received by the receiving module 601 is the same as that of a F-DPCH, the mapping module 602 may acquire the code sequence from a single slot of the PCICH, or may acquire one 1-bit PCI information from each of two slots of the PCICH and then combine the two 1-bit PCI information into the code sequence.

In further another exemplary embodiment of the present invention, the terminal may further include an MIMO module or an uplink CLTD module. The MIMO module is configured to perform uplink MIMO transmission by using the PCI information; and the uplink CLTD module is configured to perform uplink CLTD transmission by using the PCI information.

In still further another exemplary embodiment of the present invention, a table of mapping relationship between PCI values and pre-coding weights is further included. The MIMO module searches the table of mapping relationship between PCI values and pre-coding weights according to the PCI value to obtain a pre-coding weight $w_2^{pref}$ of a second antenna, and achieves the communication in uplink MIMO mode according to $\left(w_1^{pref}, w_2^{pref}\right)$.

Persons of ordinary skill in the art should understand that all or a part of the steps of the methods according to the embodiments may be implemented by a program instructing relevant hardware. The program may be stored in a computer readable storage medium. When the program runs, the steps of the methods according to the embodiments are performed. The storage medium includes any medium that is capable of storing program codes, such as a ROM, a RAM, a magnetic disk, and an optical disk.

The beneficial effect of embodiments of the present invention is: by feeding back the PCI information, the terminal can maximize a block length supported by an existing channel condition in uplink MIMO transmission or uplink CLTD transmission, so as to improve an uplink transmission rate.

The method for feeding back and receiving PCI, and the communication device according to the embodiments of the present invention are applicable not only in uplink MIMO transmission, but also in uplink CLTD transmission.

The objectives, technical solutions, and beneficial effects of the present invention have been described in detail through the above specific embodiments. It should be understood that the above descriptions are merely exemplary embodiments of the present invention, but not intended to limit the present invention.

## Claims

**1.** A method for feeding back Pre-coding Control Indication, PCI, information, comprising:

carrying (101) a code sequence, which represents PCI information, in a feedback channel of a Base Station, BS, when uplink Multiple-Input Multiple-Output, MIMO, transmission or uplink Closed Loop Transmit Diversity, CLTD, transmission is performed; wherein
a frame format of the feedback channel is the same as that of a 2 ms Enhanced Dedicated Channel, E-DCH, Hybrid ARQ Indicator Channel, EHICH, or a 2ms E-DCH Relative Grant Channel, ERGCH;
wherein a sequence transmitted in $i^{th}$ slot of the feedback channel is $b_{ij} = a_i\, C_{ss,40,\, m(i),j}$; wherein values of i and j are in the range of 0 to 39, $C_{ss,40,\, m(i),j}$ is an orthogonal signature sequence, and a value of $a_i$ in each slot i is 0 or 1; and the code sequence is a set of $a_i$;
the orthogonal signature sequence $C_{ss,40,\, m(i),j}$ is selected by the following manner:

finding out a corresponding row in an index list (L) as defined in a first table according to a value of a signature sequence index L configured by an upper layer;
acquiring index m(i) values of different slots in the row according to the value of the slot i; and
finding out a corresponding row in the $C_{ss,40,\ m(i)}$ according to the m(i) value, where a signature sequence represented by the row in the $C_{ss,40,\ m(i)}$ is the orthogonal signature sequence used in the slot i;

wherein the first table is:

| Index list (L) | Index value m(i) of a slot i | | |
|---|---|---|---|
| | *i* mod3 = 0 | *i* mod3 = 1 | *i* mod3 = 2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |
| 19 | 19 | 23 | 11 |
| 20 | 20 | 39 | 9 |
| 21 | 21 | 22 | 3 |
| 22 | 22 | 9 | 15 |
| 23 | 23 | 36 | 20 |
| 24 | 24 | 0 | 26 |
| 25 | 25 | 5 | 24 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |
| 32 | 32 | 20 | 37 |

(continued)

| Index list (L) | Index value m(i) of a slot i | | |
|---|---|---|---|
| | *i* mod3 = 0 | *i* mod3 = 1 | *i* mod3 = 2 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

and wherein the $C_{ss,40,m(i)}$ is

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | 1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

2. The method according to claim 1, wherein if the frame format of the feedback channel is the same as that of the 2ms EHICH or the 2ms ERGCH, first two slots of the feedback channel are used to carry the code sequence.

3. The method according to claim 1, wherein if the frame format of the feedback channel is the same as that of the 2ms EHICH or the 2ms ERGCH, three slots of the feedback channel are used to carry the code sequence.

**4.** A base station, BS, comprising:

a carrying module (401), configured to carry a code sequence, which represents Pre-coding Control Indication, PCI, information, in a feedback channel of the BS when uplink Multiple-Input Multiple-Output, MIMO, transmission or uplink Closed Loop Transmit Diversity, CLTD, transmission is performed, wherein a frame format of the feedback channel is the same as that of a 2 ms Enhanced Dedicated Channel, E-DCH, Hybrid ARQ Indicator Channel, EHICH, or a 2ms E-DCH Relative Grant Channel, ERGCH;
wherein a sequence transmitted in $i^{th}$ slot of the feedback channel is $b_{ij} = a_i C_{ss,40,\, m(i),j}$; wherein values of i and j are in the range of 0 to 39, $C_{ss,40,\, m(i),j}$ is an orthogonal signature sequence, and a value of $a_i$ in each slot i is 0 or 1; and the code sequence is a set of $a_i$;
the carrying module (401) is further configured to select the orthogonal signature sequence $C_{ss,40,\, m(i),j}$ by the following manner:

finding out a corresponding row in an index list (L) as defined in a first table according to a value of a signature sequence index L configured by an upper layer;
acquiring index m(i) values of different slots in the row according to the value of the slot i; and
finding out a corresponding row in the $C_{ss,40,\, m(i)}$ according to the m(i) value, where a signature sequence represented by the row in the $C_{ss,40,\, m(i)}$ is the orthogonal signature sequence used in the slot i;

wherein the first table is:

| Index list (L) | Index value m(i) of a slot i | | |
|---|---|---|---|
| | *i* mod3 = 0 | *i* mod3 = 1 | *i* mod3 = 2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |
| 19 | 19 | 23 | 11 |
| 20 | 20 | 39 | 9 |
| 21 | 21 | 22 | 3 |

(continued)

| Index list (L) | Index value m(i) of a slot i | | |
|---|---|---|---|
| | *i* mod3 = 0 | *i* mod3 = 1 | *i* mod3 = 2 |
| 22 | 22 | 9 | 15 |
| 23 | 23 | 36 | 20 |
| 24 | 24 | 0 | 26 |
| 25 | 25 | 5 | 24 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |
| 32 | 32 | 20 | 37 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

and wherein the $C_{ss,40,\ m(i)}$ is

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | 1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

5. The BS according to claim 4, wherein if the frame format of the feedback channel is the same as that of the 2ms EHICH or the 2ms ERGCH, the carrying module is further configured to carry the code sequence in first two slots of the feedback channel.

6. The BS according to claim 4, wherein if the frame format of the feedback channel is the same as that of the 2ms EHICH or the 2ms ERGCH, the carrying module is further configured to carry the code sequence in three slots of the feedback channel.

7. A method for receiving Pre-coding Control Indication, PCI, information at a terminal side, comprising:

receiving (501) a code sequence, which represents PCI information, fed back by a Base Station, BS, when uplink Multiple-Input Multiple Output, MIMO, transmission or uplink Closed Loop Transmit Diversity, CLTD, transmission is performed, wherein a frame format of the feedback channel used by the BS is the same as that of a 2ms Enhanced Dedicated Channel, E-DCH, Hybrid ARQ Indicator Channel, EHICH, or a 2ms E-DCH Relative Grant Channel, ERGCH; and
acquiring (502), by the terminal, the PCI information according to the code sequence;
wherein a sequence transmitted in $i^{th}$ slot of the feedback channel is $b_{ij} = a_i C_{ss,40,m(i),j}$;
wherein
values of i and j are in the range of 0 to 39, $C_{ss,40,m(i),j}$ is an orthogonal signature sequence, and a value of $a_i$ in each slot i is 0 or 1; and the code sequence is a set of $a_i$;
the orthogonal signature sequence $C_{ss,40,m(i),j}$ is selected by the following manner:

finding out a corresponding row in an index list (L) as defined in a first table according to a value of a signature sequence index L configured by an upper layer;
acquiring index m(i) values of different slots in the row according to the value of the slot i; and
finding out a corresponding row in the $C_{ss,40,\ m(i)}$ according to the m(i) value, where a signature sequence represented by the row in the $C_{ss,40,\ m(i)}$ is the orthogonal signature sequence used in the slot i;

wherein the first table is:

| Index list (L) | Index value m(i) of a slot i | | |
|---|---|---|---|
| | *i* mod3 = 0 | *i* mod3 = 1 | *i* mod3 = 2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |
| 19 | 19 | 23 | 11 |
| 20 | 20 | 39 | 9 |
| 21 | 21 | 22 | 3 |
| 22 | 22 | 9 | 15 |
| 23 | 23 | 36 | 20 |
| 24 | 24 | 0 | 26 |
| 25 | 25 | 5 | 24 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |

(continued)

| Index list (L) | Index value m(i) of a slot i | | |
|---|---|---|---|
| | *i* mod3 = 0 | *i* mod3 = 1 | *i* mod3 = 2 |
| 32 | 32 | 20 | 37 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

and wherein the $C_{ss,40,\ m(i)}$ is

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | 1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

**8.** The method according to claim 7, wherein in the receiving the code sequence representing the PCI information, if a frame format of the received feedback channel is the same as that of the 2ms EHICH or the 2ms ERGCH, acquiring the code sequence from first two slots of the feedback channel.

**9.** The method according to claim 7, wherein in the receiving the code sequence representing the PCI information, if a frame format of the received feedback channel is the same as that of the 2ms EHICH or the 2ms ERGCH, acquiring the code sequence from three slots of the feedback channel.

**10.** The method according to any one of claims 7 to 9, wherein after the acquiring the PCI information according to the code sequence, the method further comprises:

acquiring a pre-coding weight $w_2^{pref}$
corresponding to the PCI information through a mapping relationship table of PCI values and pre-coding weights; and
performing the uplink MIMO communication by using the pre-coding weight.

**11.** A terminal, comprising:

a receiving module (601), configured to receive a code sequence, which represents Pre-coding Control Indication, PCI, information, fed back by a Base Station, BS, when uplink Multiple-Input Multiple Output, MIMO, transmission or uplink Closed Loop Transmit Diversity, CLTD, transmission is performed, wherein a frame format of the feedback channel used by the BS is the same as that of a 2ms Enhanced Dedicated Channel, E-DCH, Hybrid ARQ Indicator Channel, EHICH, or a 2ms E-DCH Relative Grant Channel, ERGCH; and
a mapping module (602), configured to acquire the PCI information according to the code sequence;
wherein a sequence transmitted in $i^{th}$ slot of the feedback channel is $b_{ij} = a_i C_{ss,40,\ m(i),j}$; wherein values of i and j are in the range of 0 to 39, $C_{ss,40,\ m(i),j}$ is an orthogonal signature sequence, and a value of $a_i$ in each slot i is 0 or 1; and the code sequence is a set of $a_i$;
the orthogonal signature sequence $C_{ss,40,\ m(i),j}$ is selected by the following manner:

finding out a corresponding row in an index list (L) as defined in a first table according to a value of a signature sequence index L configured by an upper layer;
acquiring index m(i) values of different slots in the row according to the value of the slot i; and
finding out a corresponding row in the $C_{ss,40,\ m(i)}$ according to the m(i) value, where a signature sequence represented by the row in the $C_{ss,40,\ m(i)}$ is the orthogonal signature sequence used in the slot i;

wherein the first table is:

| Index list (L) | Index value m(i) of a slot i | | |
|---|---|---|---|
| | *i* mod3 = 0 | *i* mod3 = 1 | *i* mod3 = 2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |

(continued)

| Index list (L) | Index value m(i) of a slot i | | |
|---|---|---|---|
| | *i* mod3 = 0 | *i* mod3 = 1 | *i* mod3 = 2 |
| 16 | 16 | 35 | 19 |
| 17 | 17 | 21 | 36 |
| 18 | 18 | 37 | 2 |
| 19 | 19 | 23 | 11 |
| 20 | 20 | 39 | 9 |
| 21 | 21 | 22 | 3 |
| 22 | 22 | 9 | 15 |
| 23 | 23 | 36 | 20 |
| 24 | 24 | 0 | 26 |
| 25 | 25 | 5 | 24 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |
| 32 | 32 | 20 | 37 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

wherein the $C_{ss,40,\ m(i)}$ is

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | -1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

**12.** The terminal according to claim 11, wherein if the frame format of the feedback channel received by the receiving module is the same as that of the 2ms EHICH or the 2ms ERGCH,
the mapping module is further configured to acquire the code sequence from first two slots of the feedback channel.

**13.** The terminal according to claim 11, wherein if the frame format of the feedback channel received by the receiving module is the same as that of the 2ms EHICH or the 2ms ERGCH,
the mapping module is further configured to acquire the code sequence from three slots of the feedback channel.

**14.** The terminal according to any one of claims 11 to 13, further comprising:

an MIMO module, configured to acquire a pre-coding weight $w_2^{pref}$ of a second antenna by searching a mapping relationship table of PCI values and pre-coding weights according to the PCI value; and to perform communication in uplink MIMO mode according to $\left(w_1^{pref}, w_2^{pref}\right)$.

## Patentansprüche

**1.** Verfahren zum Rückmelden von Vorcodierungs-Steuermeldungs- bzw. PCI-Informationen, umfassend:

Führen (101) einer Codesequenz, die PCI-Informationen repräsentiert, in einem Rückmeldekanal einer Basisstation, BS, wenn Aufwärtsverbindungs-Mehrfacheingang-Mehrfachausgang- bzw. -MIMO-Übertragung oder Aufwärtsverbindungs-Regelschleifen-Sendediversity- bzw. -CLTD-Übertragung durchgeführt wird; wobei ein Rahmenformat des Rückmeldekanals das gleiche ist wie das eines verbesserten dedizierten 2-ms-Kanals, E-DCH, Hybrid-ARQ-Meldungskanals, EHICH, oder eines 2-ms-E-DCH-Relativgenehmigungskanals, ERGCH; wobei eine im i-ten Schlitz des Rückmeldekanals übertragene Sequenz $b_{ij}=a_iC_{ss,40,m(i)j}$ ist, wobei Werte von i und j im Bereich von 0 bis 39 sind, $C_{ss,40,m(i)j}$ eine orthogonale Signatursequenz ist und ein Wert von $a_i$ in jedem Schlitz 0 oder 1 ist; und die Codesequenz eine Menge von $a_i$ ist;
die orthogonale Signatursequenz $C_{ss,40,m(i),j}$ wie folgt ausgewählt wird:

Herausfinden einer korrespondierenden Reihe in einer Indexliste (L), wie in einer ersten Tabelle definiert, gemäß einem Wert eines durch eine obere Schicht konfigurierten Signatursequenzindexes L;
Erfassen von Werten des Indexes m(i) von verschiedenen Schlitzen in der Reihe gemäß dem Wert des Schlitzes i; und
Herausfinden einer korrespondierenden Reihe in der $C_{ss,40,m(i)}$ gemäß dem Wert von m(i), wobei eine durch die Reihe in der $C_{ss,40,m(i)}$ repräsentierte Signatursequenz die in dem Schlitz i verwendete orthogonale Signatursequenz ist;

wobei die erste Tabelle die folgende ist:

| Indexliste (L) | Indexwert m(i) eines Schlitzes i | | |
|---|---|---|---|
| | *i* mod 3 = 0 | *i* mod 3 = 1 | *i* mod 3 = 2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |
| 19 | 19 | 23 | 11 |
| 20 | 20 | 39 | 9 |
| 21 | 21 | 22 | 3 |
| 22 | 22 | 9 | 15 |
| 23 | 23 | 36 | 20 |
| 24 | 24 | 0 | 26 |
| 25 | 25 | 5 | 24 |

(fortgesetzt)

| Indexliste (L) | Indexwert m(i) eines Schlitzes i | | |
|---|---|---|---|
| | *i* mod 3 = 0 | *i* mod 3 = 1 | *i* mod 3 = 2 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |
| 32 | 32 | 20 | 37 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

ist und wobei die $C_{ss,40,m(i)}$

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | 1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

ist.

**2.** Verfahren nach Anspruch 1, wobei, wenn das Rahmenformat des Rückmeldekanals das gleiche ist wie das des 2-ms-EHICH oder des 2-ms-ERGCH, erste zwei Schlitze des Rückmeldekanals zum Führen der Codesequenz verwendet werden.

**3.** Verfahren nach Anspruch 1, wobei, wenn das Rahmenformat des Rückmeldekanals das gleiche ist wie das des 2-ms-EHICH oder des 2-ms-ERGCH, drei Schlitze des Rückmeldekanals zum Führen der Codesequenz verwendet werden.

**4.** Basisstation, BS, umfassend:

ein Führungsmodul (401), konfiguriert zum Führen einer Codesequenz, die Vorcodierungs-Steuermeldungs- bzw. PCI-Informationen repräsentiert, in einem Rückmeldekanal der BS, wenn Aufwärtsverbindungs-Mehrfacheingang-Mehrfachausgang- bzw. -MIMO-Übertragung oder Aufwärtsverbindungs-Regelschleifen-Sendediversity- bzw. -CLTD-Übertragung durchgeführt wird; wobei ein Rahmenformat des Rückmeldekanals das gleiche ist wie das eines verbesserten dedizierten 2-ms-Kanals, E-DCH, Hybrid-ARQ-Meldungskanals, EHICH, oder eines 2-ms-E-DCH-Relativgenehmigungskanals, ERGCH;
wobei eine im i-ten Schlitz des Rückmeidekanals übertragene Sequenz $b_{ij}=a_iC_{ss,40,m(i)j}$ ist, wobei Werte von i und j im Bereich von 0 bis 39 sind, $C_{ss,40,m(i)j}$ eine orthogonale Signatursequenz ist und ein Wert von $a_i$ in jedem Schlitz 0 oder 1 ist; und die Codesequenz eine Menge von $a_i$ ist;
das Führungsmodul (401) ferner konfiguriert ist, die orthogonale Signatursequenz $C_{ss,40,m(i)j}$ wie folgt auszuwählen:

Herausfinden einer korrespondierenden Reihe in einer Indexliste (L), wie in einer ersten Tabelle definiert, gemäß einem Wert eines durch eine obere Schicht konfigurierten Signatursequenzindexes L;

Erfassen von Werten des Indexes m(i) von verschiedenen Schlitzen in der Reihe gemäß dem Wert des Schlitzes i; und

Herausfinden einer korrespondierenden Reihe in der $C_{ss,40,m(i)}$ gemäß dem Wert von m(i), wobei eine durch die Reihe in der $C_{ss,40,m(i)}$ repräsentierte Signatursequenz die in dem Schlitz i verwendete orthogonale Signatursequenz ist;

wobei die erste Tabelle die folgende ist:

| Indexliste (L) | Indexwert m(i) eines Schlitzes i | | |
|---|---|---|---|
| | *i* mod 3 = 0 | *i* mod 3 = 1 | *i* mod 3 = 2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |
| 19 | 19 | 23 | 11 |
| 20 | 20 | 39 | 9 |
| 21 | 21 | 22 | 3 |
| 22 | 22 | 9 | 15 |
| 23 | 23 | 36 | 20 |
| 24 | 24 | 0 | 26 |
| 25 | 25 | 5 | 24 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |

(fortgesetzt)

| Indexliste (L) | Indexwert m(i) eines Schlitzes i | | |
|---|---|---|---|
| | *i* mod 3 = 0 | *i* mod 3 = 1 | *i* mod 3 = 2 |
| 32 | 32 | 20 | 37 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

ist und wobei die $C_{22,40,m(i)}$

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | 1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

ist.

**5.** BS nach Anspruch 4, wobei, wenn das Rahmenformat des Rückmeldekanals das gleiche ist wie das des 2-ms-EHICH oder des 2-ms-ERGCH, das Führungsmodul ferner konfiguriert ist, die Codesequenz in ersten zwei Schlitzen des Rückmeldekanals zu führen.

**6.** BS nach Anspruch 4, wobei, wenn das Rahmenformat des Rückmeldekanals das gleiche ist wie das des 2-ms-EHICH oder des 2-ms-ERGCH, das Führungsmodul ferner konfiguriert ist, die Codesequenz in drei Schlitzen des Rückmeldekanals zu führen.

**7.** Verfahren zum Empfangen von Vorcodierungs-Steuermeldungs- bzw. PCI-Informationen an einer Endgeräteseite, umfassend:

Empfangen (501) einer Codesequenz, die PCI-Informationen repräsentiert, rückgemeldet von einer Basisstation, BS, wenn Aufwärtsverbindungs-Mehrfacheingang-Mehrfachausgang- bzw. -MIMO-Übertragung oder Aufwärtsverbindungs-Regelschleifen-Sendediversity- bzw. -CLTD-Übertragung durchgeführt wird; wobei ein von der BS verwendetes Rahmenformat des Rückmeldekanals das gleiche ist wie das eines verbesserten dedizierten 2-ms-Kanals, E-DCH, Hybrid-ARQ-Meldungskanals, EHICH, oder eines 2-ms-E-DCH-Relativgenehmigungskanals, ERGCH; und
Erfassen (502), durch das Endgerät, der PCI-Informationen gemäß der Codesequenz;
wobei eine im i-ten Schlitz des Rückmeldekanals übertragene Sequenz $b_{ij}=a_iC_{ss,40,m(i)j}$ ist, wobei Werte von i und j im Bereich von 0 bis 39 sind, $C_{ss,40,m(i)j}$ eine orthogonale Signatursequenz ist und ein Wert von $a_i$ in jedem Schlitz 0 oder 1 ist; und die Codesequenz eine Menge von $a_i$ ist;
die orthogonale Signatursequenz $C_{ss,40,m(i),j}$ wie folgt ausgewählt wird:

Herausfinden einer korrespondierenden Reihe in einer Indexliste (L), wie in einer ersten Tabelle definiert, gemäß einem Wert eines durch eine obere Schicht konfigurierten Signatursequenzindexes L;
Erfassen von Werten des Indexes m(i) von verschiedenen Schlitzen in der Reihe gemäß dem Wert des Schlitzes i; und
Herausfinden einer korrespondierenden Reihe in der $C_{ss,40,m(i)}$ gemäß dem Wert von m(i), wobei eine durch die Reihe in der $C_{ss,40,m(i)}$ repräsentierte Signatursequenz die in dem Schlitz i verwendete orthogonale Signatursequenz ist;

wobei die erste Tabelle die folgende ist:

| Indexliste (L) | Indexwert m(i) eines Schlitzes i | | |
|---|---|---|---|
| | *i* mod 3 = 0 | *i* mod 3 = 1 | *i* mod 3 = 2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |

(fortgesetzt)

| Indexliste (L) | Indexwert m(i) eines Schlitzes i | | |
|---|---|---|---|
| | *i* mod 3 = 0 | *i* mod 3 = 1 | *i* mod 3 = 2 |
| 19 | 19 | 23 | 11 |
| 20 | 20 | 39 | 9 |
| 21 | 21 | 22 | 3 |
| 22 | 22 | 9 | 15 |
| 23 | 23 | 36 | 20 |
| 24 | 24 | 0 | 26 |
| 25 | 25 | 5 | 24 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |
| 32 | 32 | 20 | 37 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

ist und wobei die $C_{ss,40,m(i)}$

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | 1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

ist.

8. Verfahren nach Anspruch 7, wobei beim Empfangen der Codesequenz, die die PCI-Informationen repräsentiert, wenn ein Rahmenformat des empfangenen Rückmeldekanals das gleiche ist wie das des 2-ms-EHICH oder des 2-ms-ERGCH,
Erfassen der Codesequenz aus den ersten zwei Schlitzen des Rückmeldekanals.

9. Verfahren nach Anspruch 7, wobei beim Empfangen der Codesequenz, die die PCI-Informationen repräsentiert, wenn ein Rahmenformat des empfangenen Rückmeldekanals das gleiche ist wie das des 2-ms-EHICH oder des 2-ms-ERGCH,
Erfassen der Codesequenz aus drei Schlitzen des Rückmeldekanals.

10. Verfahren nach einem der Ansprüche 7 bis 9, wobei das Verfahren nach dem Erfassen der PCI-Informationen gemäß der Codesequenz ferner umfasst:

Erfassen eines Vorcodierungsgewichts, $w_2^{pref}$, das mit den PCI-Informationen korrespondiert, durch eine Abbildungsbeziehungstabelle von PCI-Werten und Vorcodierungsgewichten; und
Durchführen der Aufwärtsverbindungs-MIMO-Kommunikation unter Verwendung des Vorcodierungsgewichts.

11. Endgerät, umfassend:

ein Empfangsmodul (601), konfiguriert zum Empfangen einer Codesequenz, die Vorcodierungs-Steuermeldungs- bzw. PCI-Informationen repräsentiert, rückgemeldet von einer Basisstation, BS, wenn Aufwärtsverbindungs-Mehrfacheingang-Mehrfachausgang- bzw. -MIMO-Übertragung oder Aufwärtsverbindungs-Regelschleifen-Sendediversity- bzw. -CLTD-Übertragung durchgeführt wird; wobei ein von der BS verwendetes Rahmenformat des Rückmeldekanals das gleiche ist wie das eines verbesserten dedizierten 2-ms-Kanals, E-DCH, Hybrid-ARQ-Meldungskanals, EHICH, oder eines 2-ms-E-DCH-Relativgenehmigungskanals, ERGCH; und ein Abbildungsmodul (602), konfiguriert zum Erfassen der PCI-Informationen gemäß der Codesequenz; wobei eine im i-ten Schlitz des Rückmeldekanals übertragene Sequenz $b_{ij}=a_iC_{ss,40,m(i)j}$ ist, wobei Werte von i und j im Bereich von 0 bis 39 sind, $C_{ss,40,m(i)j}$ eine orthogonale Signatursequenz ist und ein Wert von $a_i$ in jedem Schlitz 0 oder 1 ist; und die Codesequenz eine Menge von $a_i$ ist;
die orthogonale Signatursequenz $C_{ss,40,m(i),j}$ wie folgt ausgewählt wird:

Herausfinden einer korrespondierenden Reihe in einer Indexliste (L), wie in einer ersten Tabelle definiert, gemäß einem Wert eines durch eine obere Schicht konfigurierten Signatursequenzindexes L;
Erfassen von Werten des Indexes m(i) von verschiedenen Schlitzen in der Reihe gemäß dem Wert des Schlitzes i; und
Herausfinden einer korrespondierenden Reihe in der $C_{ss,40,m(i)}$ gemäß dem Wert von m(i), wobei eine durch die Reihe in der $C_{ss,40,m(i)}$ repräsentierte Signatursequenz die in dem Schlitz i verwendete orthogonale Signatursequenz ist;

wobei die erste Tabelle die folgende ist:

| Indexliste (L) | Indexwert m(i) eines Schlitzes i | | |
|---|---|---|---|
| | *i* mod 3 = 0 | *i* mod 3 = 1 | *i* mod 3 = 2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |
| 19 | 19 | 23 | 11 |
| 20 | 20 | 39 | 9 |
| 21 | 21 | 22 | 3 |
| 22 | 22 | 9 | 15 |
| 23 | 23 | 36 | 20 |
| 24 | 24 | 0 | 26 |
| 25 | 25 | 5 | 24 |

(fortgesetzt)

| Indexliste (L) | Indexwert m(i) eines Schlitzes i | | |
|---|---|---|---|
| | *i* mod 3 = 0 | *i* mod 3 = 1 | *i* mod 3 = 2 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |
| 32 | 32 | 20 | 37 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

ist und wobei die $C_{ss,40,m(i)}$

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | -1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | 1 | 1 | 1 | 1 | -1 | -1 | -1 | -1 | 1 | 1 | -1 | -1 | 1 | 1 | 1 | -1 | 1 | -1 | 1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | -1 | -1 | -1 | -1 | -1 | -1 | 1 | 1 | -1 | 1 | 1 | 1 | -1 | -1 | -1 | 1 | 1 | 1 | 1 |

ist.

12. Endgerät nach Anspruch 11, wobei, wenn das Rahmenformat des von dem Empfangsmodul empfangenen Rückmeldekanals das gleiche ist wie das des 2-ms-EHICH oder des 2-ms-ERGCH,
das Abbildungsmodul ferner konfiguriert ist zum Erfassen der Codesequenz aus den ersten zwei Schlitzen des Rückmeldekanals.

13. Endgerät nach Anspruch 11, wobei, wenn das Rahmenformat des von dem Empfangsmodul empfangenen Rückmeldekanals das gleiche ist wie das des 2-ms-EHICH oder des 2-ms-ERGCH,
das Abbildungsmodul ferner konfiguriert ist zum Erfassen der Codesequenz aus drei Schlitzen des Rückmeldekanals.

14. Endgerät nach einem der Ansprüche 11 bis 13, ferner umfassend:

ein MIMO-Modul, konfiguriert zum Erfassen eines Vorcodierungsgewichts, $w_2^{pref}$, einer zweiten Antenne durch Durchsuchen einer Abbildungsbeziehungstabelle von PCI-Werten und Vorcodierungsgewichten gemäß dem PCI-Wert; und zum Durchführen von Kommunikation in einem Aufwärtsverbindungs-MIMO-Modus gemäß ($w_1^{pref}$, $w_2^{pref}$).

## Revendications

1. Procédé pour retourner des informations d'indication de commande de précodage, PCI, comprenant les étapes suivantes :

acheminer (101) une séquence de codes, qui représente des informations PCI, dans un canal de retour d'une station de base, BS, lorsqu'une transmission à entrées multiples, sorties multiples, MIMO, dans la liaison montante ou une transmission en diversité d'émission en boucle fermée, CLTD, dans la liaison montante est effectuée ; où
un format de trame du canal de retour est le même que celui d'un canal dédié amélioré 2 ms, E-DCH, d'un canal d'indicateur ARQ hybride, EHICH, ou d'un canal d'octroi relatif E-DCH 2 ms, ERGCH ;
où une séquence transmise sur le $i^{ème}$ créneau du canal de retour est $b_{ij} = a_i C_{ss, 40, m(i),j}$ ; où
des valeurs de i et j sont dans l'intervalle s'étendant de 0 à 39, $C_{ss, 40, m(i),j}$ est une séquence signature orthogonale, et une valeur de $a_i$ dans chaque créneau i est 0 ou 1 ; et la séquence de codes est un ensemble de $a_i$ ;
la séquence signature orthogonale $C_{SS, 40, m(i),j}$ est sélectionnée de la manière suivante

trouver une rangée correspondante dans une liste d'indices (L) telle que définie dans un premier tableau en fonction d'une valeur d'un indice L de séquence signature configuré par une couche supérieure ;
acquérir des valeurs m(i) d'indice de différents créneaux dans la rangée en fonction de la valeur du créneau i ; et
trouver une rangée correspondante dans le tableau $C_{SS, 40, m(i)}$ en fonction de la valeur m(i), une séquence signature représentée par la rangée dans le tableau $C_{SS, 40, m(i)}$ étant la séquence signature orthogonale utilisée dans le créneau i ;

où le premier tableau est :

| Liste d'indices (L) | Valeur m(i) d'indice d'un créneau i | | |
|---|---|---|---|
| | *i* mod 3 = 0 | *i* mod 3 = 1 | *i* mod 3 = 2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |
| 19 | 19 | 23 | 11 |
| 20 | 20 | 39 | 9 |
| 21 | 21 | 22 | 3 |
| 22 | 22 | 9 | 15 |
| 23 | 23 | 36 | 20 |

(suite)

| Liste d'indices (L) | Valeur m(i) d'indice d'un créneau i | | |
|---|---|---|---|
| | *i* mod 3 = 0 | *i* mod 3 = 1 | *i* mod 3 = 2 |
| 24 | 24 | 0 | 26 |
| 25 | 25 | 5 | 24 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |
| 32 | 32 | 20 | 37 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

et où le tableau $C_{SS, 40, m(i)}$ est

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | 1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

2. Procédé selon la revendication 1, dans lequel, si le format de trame du canal de retour est le même que celui du EHICH 2 ms ou du ERGCH 2 ms, les deux premiers créneaux du canal de retour sont utilisés pour acheminer la séquence de codes.

3. Procédé selon la revendication 1, dans lequel, si le format de trame du canal de retour est le même que celui du EHICH 2 ms ou du ERGCH 2 ms, trois créneaux du canal de retour sont utilisés pour acheminer la séquence de codes.

4. Station de base, BS, comprenant :

un module d'acheminement (401), configuré pour acheminer une séquence de codes, qui représente des informations d'indication de commande de précodage, PCI, dans un canal de retour de la BS lorsqu'une transmission à entrées multiples, sorties multiples, MIMO, dans la liaison montante ou une transmission en diversité d'émission en boucle fermée, CLTD, dans la liaison montante est effectuée, où un format de trame du canal de retour est le même que celui d'un canal dédié amélioré 2 ms, E-DCH, d'un canal d'indicateur ARQ hybride, EHICH, ou d'un canal d'octroi relatif E-DCH 2 ms, ERGCH ;
où une séquence transmise sur le $i^{ème}$ créneau du canal de retour est $b_{ij} = a_i C_{ss,\,40,\,m(i),j}$ ; où
des valeurs de i et j sont dans l'intervalle s'étendant de 0 à 39, $C_{ss,\,40,\,m(i),j}$ est une séquence signature orthogonale, et une valeur de $a_i$ dans chaque créneau i est 0 ou 1 ; et la séquence de codes est un ensemble de $a_i$ ;
le module d'acheminement (401) est en outre configuré pour sélectionner la séquence signature orthogonale $C_{SS,\,40,\,m(i),j}$ de la manière suivante :

trouver une rangée correspondante dans une liste d'indices (L) telle que définie dans un premier tableau en fonction d'une valeur d'un indice L de séquence signature configuré par une couche supérieure ;
acquérir des valeurs m(i) d'indice de différents créneaux dans la rangée en fonction de la valeur du créneau i ; et
trouver une rangée correspondante dans le tableau $C_{SS,\ 40,\ m(i)}$ en fonction de la valeur m(i), une séquence signature représentée par la rangée dans le tableau $C_{SS,\ 40,\ m(i)}$ étant la séquence signature orthogonale utilisée dans le créneau i ;

où le premier tableau est :

| Liste d'indices (L) | Valeur m(i) d'indice d'un créneau i | | |
|---|---|---|---|
| | *i* mod3 = 0 | *i* mod3 = 1 | *i* mod3 = 2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |
| 19 | 19 | 23 | 11 |
| 20 | 20 | 39 | 9 |
| 21 | 21 | 22 | 3 |
| 22 | 22 | 9 | 15 |
| 23 | 23 | 36 | 20 |
| 24 | 24 | 0 | 26 |
| 25 | 25 | 5 | 24 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |
| 32 | 32 | 20 | 37 |

(suite)

| Liste d'indices (L) | Valeur m(i) d'indice d'un créneau i | | |
|---|---|---|---|
| | *i* mod3 = 0 | *i* mod3 = 1 | *i* mod3 = 2 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

et où le tableau $C_{SS, 40, m(i)}$ est

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | 1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

5. BS selon la revendication 4, dans laquelle, si le format de trame du canal de retour est le même que celui du EHICH 2 ms ou du ERGCH 2 ms, le module d'acheminement est en outre configuré pour acheminer la séquence de codes dans deux premiers créneaux du canal de retour.

6. BS selon la revendication 4, dans laquelle, si le format de trame du canal de retour est le même que celui du EHICH 2 ms ou du ERGCH 2 ms, le module d'acheminement est en outre configuré pour acheminer la séquence de codes dans trois créneaux du canal de retour.

**7.** Procédé pour recevoir des informations d'indication de commande de précodage, PCI, du côté d'un terminal, comprenant les étapes suivantes :

recevoir (501) une séquence de codes, qui représente des informations PCI, retournées par une station de base, BS, lorsqu'une transmission à entrées multiples, sorties multiples, MIMO, dans la liaison montante ou une transmission en diversité d'émission en boucle fermée, CLTD, dans la liaison montante est effectuée, où un format de trame du canal de retour utilisé par la BS est le même que celui d'un canal dédié amélioré 2 ms, E-DCH, d'un canal d'indicateur ARQ hybride, EHICH, ou d'un canal d'octroi relatif E-DCH 2 ms, ERGCH ; et acquérir (502), par le terminal, les informations PCI conformément à la séquence de codes ;
où une séquence transmise sur le $i^{ème}$ créneau du canal de retour est $b_{ij} = a_i C_{ss, 40, m(i),j}$ ; où des valeurs de i et j sont dans l'intervalle s'étendant de 0 à 39, $C_{ss, 40, m(i),j}$ est une séquence signature orthogonale, et une valeur de $a_i$ dans chaque créneau i est 0 ou 1 ; et la séquence de codes est un ensemble de $a_i$ ;
la séquence signature orthogonale $C_{ss, 40, m(i),j}$ est sélectionnée de la manière suivante :

trouver une rangée correspondante dans une liste d'indices (L) telle que définie dans un premier tableau en fonction d'une valeur d'un indice L de séquence signature configuré par une couche supérieure ;
acquérir des valeurs m(i) d'indice de différents créneaux dans la rangée en fonction de la valeur du créneau i ; et
trouver une rangée correspondante dans le tableau $C_{SS, 40, m(i)}$ en fonction de la valeur m(i), une séquence signature représentée par la rangée dans le tableau $C_{SS, 40, m(i)}$ étant la séquence signature orthogonale utilisée dans le créneau i ;

où le premier tableau est :

| Liste d'indices (L) | Valeur m(i) d'indice d'un créneau i | | |
|---|---|---|---|
| | *i* mod3= 0 | *i* mod3=1 | *i* mod3=2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34. |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |
| 19 | 19 | 23 | 11 |

(suite)

| Liste d'indices (L) | Valeur m(i) d'indice d'un créneau i | | |
|---|---|---|---|
| | *i* mod3= 0 | *i* mod3=1 | *i* mod3=2 |
| 20 | 20 | 39 | 9 |
| 21 | 21 | 22 | 3 |
| 22 | 22 | 9 | 15 |
| 23 | 23 | 36 | 20 |
| 24 | 24 | 0 | 26 |
| 25 | 25 | 5 | 24 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |
| 32 | 32 | 20 | 37 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

et où le tableau $C_{SS,\ 40,\ m(i)}$ est

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | 1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

**8.** Procédé selon la revendication 7, dans lequel, à la réception de la séquence de codes représentant les informations PCI, si un format de trame du canal de retour reçu est le même que celui du EHICH 2 ms ou du ERGCH 2 ms, acquérir la séquence de codes depuis les deux premiers créneaux du canal de retour.

**9.** Procédé selon la revendication 7, dans lequel, à la réception de la séquence de codes représentant les informations PCI, si un format de trame du canal de retour reçu est le même que celui du EHICH 2 ms ou du ERGCH 2 ms, acquérir la séquence de codes depuis trois créneaux du canal de retour.

**10.** Procédé selon l'une quelconque des revendications 7 à 9, dans lequel, après acquisition des informations PCI conformément à la séquence de codes, le procédé comprend en outre les étapes suivantes :

acquérir un poids de précodage $w_2^{pref}$ correspondant aux informations PCI par l'intermédiaire d'une table de relation de mappage de valeurs PCI et de poids de précodage ; et
réaliser la communication MIMO dans la liaison montante en utilisant le poids de précodage.

**11.** Terminal, comprenant :

un module de réception (601), configuré pour recevoir une séquence de codes, qui représente des informations d'indication de commande de précodage, PCI, retournées par une station de base, BS, lorsqu'une transmission à entrées multiples, sorties multiples, MIMO, dans la liaison montante ou une transmission en diversité d'émission en boucle fermée, CLTD, dans la liaison montante est effectuée, où un format de trame du canal de retour utilisé par la BS est le même que celui d'un canal dédié amélioré 2 ms, E-DCH, d'un canal d'indicateur ARQ hybride, EHICH, ou d'un canal d'octroi relatif E-DCH 2 ms, ERGCH ; et
un module de mappage (602), configuré pour acquérir les informations PCI conformément à la séquence de codes ;
où une séquence transmise sur le $i^{ème}$ créneau du canal de retour est $b_{ij} = a_i C_{ss,40,m(i),j}$; où des valeurs de i et j sont dans l'intervalle s'étendant de 0 à 39, $C_{ss,40,m(i),j}$ est une séquence signature orthogonale, et une valeur de $a_i$ dans chaque créneau i est 0 ou 1 ;
et la séquence de codes est un ensemble de $a_i$ ;
la séquence signature orthogonale $C_{SS,40,m(i),j}$ est sélectionnée de la manière suivante

trouver une rangée correspondante dans une liste d'indices (L) telle que définie dans un premier tableau en fonction d'une valeur d'un indice L de séquence signature configuré par une couche supérieure ;
acquérir des valeurs m(i) d'indice de différents créneaux dans la rangée en fonction de la valeur du créneau i ; et
trouver une rangée correspondante dans le tableau $C_{SS,40,m(i)}$ en fonction de la valeur m(i), une séquence signature représentée par la rangée dans le tableau $C_{SS,40,m(i)}$ étant la séquence signature orthogonale utilisée dans le créneau i ;

où le premier tableau est :

| Liste d'indices (L) | Valeur m(i) d'indice d'un créneau i | | |
|---|---|---|---|
| | *i* mod3 = 0 | *i* mod3 = 1 | *i* mod3 = 2 |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |
| 19 | 19 | 23 | 11 |
| 20 | 20 | 39 | 9 |
| 21 | 21 | 22 | 3 |
| 22 | 22 | 9 | 15 |
| 23 | 23 | 36 | 20 |
| 24 | 24 | 0 | 26 |
| 25 | 25 | 5 | 24 |

(suite)

| Liste d'indices (L) | Valeur m(i) d'indice d'un créneau i | | |
|---|---|---|---|
| | *i* mod3 = 0 | *i* mod3 = 1 | *i* mod3 = 2 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |
| 32 | 32 | 20 | 37 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

où le tableau $C_{SS,\ 40,\ m(i)}$ est

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1 | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | 1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

**12.** Terminal selon la revendication 11, dans lequel, si le format de trame du canal de retour reçu par le module de réception est le même que celui du EHICH 2 ms ou du ERGCH 2 ms,
le module de mappage est en outre configuré pour acquérir la séquence de codes depuis les deux premiers créneaux du canal de retour.

**13.** Terminal selon la revendication 11, dans lequel, si le format de trame du canal de retour reçu par le module de réception est le même que celui du EHICH 2 ms ou du ERGCH 2 ms,
le module de mappage est en outre configuré pour acquérir la séquence de codes depuis trois créneaux du canal de retour.

**14.** Terminal selon l'une quelconque des revendications 11 à 13, comprenant en outre :

un module MIMO, configuré pour acquérir un poids de précodage $w_2^{pref}$ d'une seconde antenne en effectuant une recherche dans une table de relation de mappage de valeurs PCI et en précodant des poids conformément à la valeur PCI ; et établir une communication en mode MIMO de liaison montante conformément à ($w_1^{pref}$, $w_2^{pref}$).

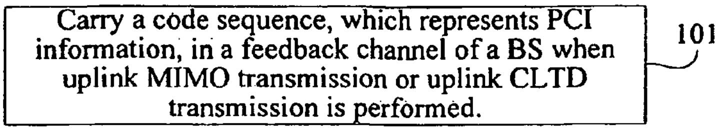


FIG 1

| | | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| $C_{ss,40,0}$ | -1 | -1 | -1 | 1 | -1 | 1 | -1 | -1 | 1 | 1 | -1 | -1 | 1 | -1 | 1 | 1 | -1 | 1 | 1 | -1 | -1 | -1 | -1 | -1 | -1 | -1 | -1 | 1 | -1 | 1 | -1 | -1 | 1 | 1 | 1 | 1 | 1 | -1 | -1 | -1 |
| $C_{ss,40,1}$ | -1 | 1 | 1 | -1 | -1 | 1 | 1 | 1 | -1 | -1 | 1 | -1 | 1 | 1 | -1 | -1 | -1 | -1 | 1 | 1 | 1 | -1 | -1 | -1 | -1 | 1 | -1 | -1 | -1 | -1 | -1 | -1 | -1 | 1 | 1 | -1 | 1 | 1 | -1 | -1 |
| $C_{ss,40,2}$ | -1 | -1 | -1 | 1 | -1 | 1 | 1 | 1 | -1 | -1 | -1 | -1 | 1 | -1 | -1 | 1 | 1 | -1 | -1 | 1 | 1 | -1 | 1 | 1 | 1 | -1 | -1 | 1 | 1 | 1 | -1 | 1 | -1 | -1 | -1 | -1 | -1 | -1 | -1 | -1 |
| $C_{ss,40,3}$ | 1 | -1 | -1 | -1 | -1 | -1 | -1 | 1 | 1 | 1 | -1 | 1 | -1 | 1 | -1 | 1 | -1 | -1 | 1 | 1 | -1 | 1 | -1 | -1 | 1 | 1 | -1 | 1 | -1 | -1 | 1 | 1 | -1 | -1 | 1 | -1 | -1 | -1 | -1 | -1 |
| $C_{ss,40,4}$ | 1 | 1 | 1 | -1 | -1 | 1 | -1 | 1 | -1 | -1 | 1 | 1 | 1 | -1 | 1 | 1 | 1 | 1 | 1 | 1 | -1 | 1 | 1 | 1 | -1 | -1 | -1 | 1 | 1 | -1 | 1 | -1 | 1 | -1 | 1 | 1 | -1 | 1 | -1 | -1 |
| $C_{ss,40,5}$ | -1 | 1 | -1 | -1 | 1 | 1 | 1 | -1 | 1 | 1 | -1 | 1 | 1 | 1 | -1 | 1 | 1 | 1 | -1 | -1 | 1 | -1 | -1 | 1 | -1 | 1 | -1 | 1 | -1 | -1 | 1 | -1 | 1 | -1 | -1 | -1 | -1 | 1 | 1 | -1 |
| $C_{ss,40,6}$ | 1 | 1 | -1 | -1 | -1 | 1 | 1 | -1 | 1 | 1 | -1 | -1 | 1 | -1 | -1 | -1 | -1 | 1 | 1 | -1 | 1 | 1 | 1 | -1 | 1 | -1 | 1 | -1 | 1 | -1 | -1 | 1 | 1 | -1 | 1 | -1 | -1 | 1 | -1 | 1 |
| $C_{ss,40,7}$ | -1 | 1 | -1 | 1 | 1 | 1 | -1 | -1 | -1 | -1 | -1 | 1 | 1 | 1 | 1 | -1 | -1 | -1 | 1 | -1 | -1 | -1 | 1 | -1 | 1 | 1 | -1 | -1 | 1 | 1 | 1 | 1 | -1 | -1 | 1 | 1 | -1 | 1 | 1 | -1 |
| $C_{ss,40,8}$ | 1 | 1 | -1 | 1 | 1 | -1 | 1 | 1 | 1 | 1 | -1 | -1 | -1 | -1 | 1 | -1 | 1 | -1 | 1 | 1 | 1 | 1 | -1 | 1 | -1 | -1 | -1 | -1 | -1 | 1 | -1 | -1 | -1 | -1 | 1 | 1 | -1 | 1 | 1 | -1 |
| $C_{ss,40,9}$ | -1 | 1 | -1 | -1 | -1 | -1 | 1 | -1 | -1 | -1 | -1 | 1 | -1 | -1 | 1 | 1 | 1 | -1 | 1 | -1 | 1 | -1 | -1 | 1 | 1 | -1 | 1 | 1 | -1 | -1 | 1 | 1 | -1 | 1 | 1 | 1 | 1 | 1 | -1 | 1 |
| $C_{ss,40,10}$ | -1 | 1 | 1 | -1 | 1 | 1 | -1 | 1 | 1 | 1 | 1 | -1 | 1 | -1 | 1 | 1 | -1 | -1 | -1 | 1 | -1 | -1 | -1 | -1 | 1 | -1 | 1 | 1 | -1 | -1 | -1 | 1 | -1 | -1 | -1 | 1 | -1 | 1 | 1 | 1 |
| $C_{ss,40,11}$ | -1 | 1 | -1 | -1 | -1 | -1 | -1 | 1 | 1 | 1 | -1 | -1 | -1 | 1 | 1 | -1 | 1 | 1 | -1 | 1 | -1 | -1 | 1 | 1 | 1 | 1 | -1 | -1 | 1 | -1 | -1 | 1 | 1 | 1 | -1 | 1 | 1 | 1 | -1 | -1 |
| $C_{ss,40,12}$ | -1 | -1 | -1 | -1 | 1 | -1 | 1 | 1 | -1 | -1 | -1 | -1 | -1 | 1 | 1 | 1 | -1 | 1 | 1 | 1 | 1 | -1 | 1 | -1 | -1 | 1 | 1 | 1 | 1 | -1 | -1 | -1 | 1 | -1 | 1 | 1 | -1 | -1 | 1 | 1 |
| $C_{ss,40,13}$ | 1 | 1 | 1 | 1 | -1 | -1 | 1 | -1 | -1 | -1 | 1 | -1 | -1 | 1 | 1 | 1. | -1 | 1 | -1 | -1 | 1 | 1 | -1 | -1 | 1 | 1 | -1 | 1 | -1 | 1 | -1 | 1 | 1 | -1 | -1 | 1 | -1 | 1 | -1 | -1 |
| $C_{ss,40,14}$ | -1 | 1 | 1 | 1 | -1 | -1 | -1 | -1 | 1 | 1 | 1 | -1 | -1 | 1 | -1 | 1 | 1 | -1 | 1 | -1 | -1 | -1 | 1 | 1 | -1 | 1 | 1 | 1 | 1 | 1 | -1 | -1 | -1 | -1 | 1 | -1 | -1 | 1 | -1 | 1 |
| $C_{ss,40,15}$ | -1 | -1 | 1 | 1 | -1 | 1 | 1 | 1 | 1 | 1 | 1 | 1 | 1 | 1 | 1 | -1 | 1 | 1 | 1 | 1 | 1 | -1 | -1 | 1 | 1 | 1 | 1 | -1 | -1 | 1 | 1 | 1 | 1 | -1 | 1 | 1 | -1 | -1 | -1 | 1 |
| $C_{ss,40,16}$ | 1 | -1 | -1 | -1 | -1 | 1 | -1 | -1 | -1 | -1 | -1 | -1 | 1 | 1 | 1 | -1 | 1 | -1 | -1 | -1 | -1 | 1 | -1 | 1 | -1 | 1 | 1 | -1 | -1 | -1 | -1 | -1 | -1 | -1 | -1 | 1 | -1 | -1 | -1 | 1 |
| $C_{ss,40,17}$ | 1 | -1 | 1 | -1 | 1 | 1 | 1 | -1 | 1 | 1 | 1 | -1 | 1 | 1 | 1 | 1 | 1 | -1 | 1 | -1 | 1 | 1 | 1 | 1 | 1 | 1 | -1 | 1 | 1 | -1 | -1 | 1 | -1 | 1 | 1 | 1 | 1 | -1 | 1 | -1 |
| $C_{ss,40,18}$ | 1 | 1 | -1 | 1 | -1 | 1 | 1 | 1 | 1 | 1 | -1 | 1 | 1 | 1 | 1 | 1 | -1 | -1 | -1 | 1 | 1 | 1 | 1 | -1 | -1 | 1 | 1 | 1 | 1 | 1 | 1 | -1 | -1 | 1 | -1 | 1 | 1 | 1 | -1 | 1 |
| $C_{ss,40,19}$ | 1 | 1 | -1 | 1 | 1 | 1 | -1 | 1 | -1 | -1 | -1 | -1 | 1 | 1 | -1 | 1 | 1 | 1 | 1 | 1 | -1 | 1 | -1 | 1 | 1 | 1 | 1 | 1 | -1 | 1 | -1 | 1 | 1 | 1 | 1 | -1 | 1 | 1 | 1 | 1 |
| $C_{ss,40,20}$ | 1 | 1 | 1 | -1 | 1 | 1 | -1 | 1 | -1 | 1 | -1 | 1 | -1 | -1 | -1 | 1 | -1 | -1 | 1 | -1 | 1 | -1 | -1 | 1 | 1 | 1 | 1 | -1 | 1 | 1 | -1 | -1 | 1 | 1 | -1 | 1 | -1 | -1 | -1 | -1 |
| $C_{ss,40,21}$ | -1 | 1 | 1 | -1 | -1 | -1 | -1 | 1 | -1 | 1 | -1 | -1 | 1 | -1 | -1 | 1 | 1 | -1 | -1 | -1 | 1 | 1 | 1 | -1 | -1 | 1 | -1 | -1 | -1 | 1 | 1 | 1 | 1 | -1 | 1 | 1 | 1 | -1 | 1 | 1 |
| $C_{ss,40,22}$ | -1 | -1 | -1 | 1 | -1 | -1 | -1 | 1 | -1 | 1 | 1 | -1 | 1 | 1 | -1 | -1 | -1 | -1 | 1 | -1 | 1 | 1 | -1 | 1 | 1 | -1 | -1 | 1 | 1 | -1 | 1 | -1 | 1 | 1 | -1 | 1 | -1 | 1 | 1 | 1 |
| $C_{ss,40,23}$ | 1 | -1 | -1 | -1 | -1 | 1 | 1 | 1 | 1 | -1 | 1 | 1 | -1 | -1 | -1 | -1 | 1 | -1 | -1 | -1 | -1 | -1 | 1 | -1 | 1 | 1 | -1 | 1 | -1 | 1 | -1 | -1 | 1 | 1 | 1 | 1 | -1 | 1 | 1 | 1 |
| $C_{ss,40,24}$ | -1 | -1 | -1 | 1 | 1 | 1 | -1 | -1 | 1 | -1 | 1 | -1 | -1 | -1 | -1 | 1 | 1 | -1 | 1 | 1 | 1 | 1 | 1 | -1 | 1 | 1 | 1 | -1 | -1 | -1 | 1 | -1 | 1 | -1 | -1 | 1 | 1 | 1 | -1 | -1 |
| $C_{ss,40,25}$ | -1 | 1 | -1 | -1 | 1 | -1 | -1 | -1 | 1 | -1 | 1 | 1 | 1 | -1 | -1 | -1 | -1 | 1 | 1 | 1 | 1 | 1 | 1 | 1 | -1 | 1 | -1 | 1 | -1 | 1 | -1 | 1 | -1 | 1 | -1 | 1 | -1 | -1 | -1 | 1 |
| $C_{ss,40,26}$ | -1 | -1 | 1 | 1 | 1 | 1 | 1 | 1 | -1 | 1 | -1 | 1 | -1 | -1 | 1 | -1 | -1 | -1 | 1 | -1 | -1 | 1 | 1 | 1 | -1 | 1 | -1 | 1 | -1 | -1 | -1 | 1 | 1 | -1 | -1 | -1 | 1 | 1 | -1 | 1 |
| $C_{ss,40,27}$ | 1 | -1 | 1 | -1 | -1 | 1 | -1 | 1 | 1 | -1 | -1 | -1 | -1 | 1 | -1 | -1 | -1 | 1 | 1 | -1 | 1 | -1 | 1 | 1 | -1 | -1 | 1 | 1 | -1 | 1 | 1 | 1 | -1 | -1 | -1 | 1 | 1 | 1 | 1 | -1 |
| $C_{ss,40,28}$ | 1 | 1 | -1 | 1 | 1 | 1 | -1 | 1 | 1 | -1 | 1 | -1 | -1 | 1 | 1 | 1 | -1 | -1 | -1 | -1 | 1 | -1 | 1 | 1 | -1 | -1 | -1 | -1 | -1 | -1 | 1 | 1 | 1 | 1 | 1 | -1 | -1 | -1 | -1 | 1 |
| $C_{ss,40,29}$ | -1 | 1 | -1 | -1 | -1 | 1 | -1 | -1 | -1 | 1 | 1 | 1 | -1 | 1 | 1 | -1 | -1 | -1 | -1 | 1 | 1 | 1 | 1 | 1 | 1 | -1 | 1 | 1 | -1 | 1 | -1 | -1 | 1 | -1 | 1 | -1 | 1 | -1 | 1 | -1 |
| $C_{ss,40,30}$ | -1 | 1 | 1 | -1 | 1 | -1 | 1 | 1 | 1 | -1 | -1 | -1 | 1 | 1 | 1 | -1 | 1 | -1 | 1 | -1 | -1 | 1 | 1 | -1 | 1 | -1 | 1 | 1 | -1 | 1 | 1 | -1 | 1 | 1 | -1 | -1 | -1 | -1 | -1 | -1 |
| $C_{ss,40,31}$ | -1 | 1 | -1 | -1 | -1 | 1 | 1 | 1 | 1 | -1 | 1 | -1 | -1 | -1 | 1 | 1 | -1 | 1 | 1 | -1 | -1 | 1 | -1 | 1 | 1 | 1 | -1 | -1 | 1 | 1 | 1 | -1 | -1 | -1 | -1 | -1 | 1 | -1 | 1 | 1 |
| $C_{ss,40,32}$ | 1 | 1 | 1 | 1 | -1 | -1 | 1 | -1 | 1 | -1 | -1 | 1 | 1 | 1 | -1 | 1 | -1 | -1 | 1 | 1 | -1 | -1 | 1 | 1 | 1 | -1 | -1 | -1 | -1 | -1 | -1 | -1 | 1 | -1 | -1 | 1 | 1 | -1 | 1 | 1 |
| $C_{ss,40,33}$ | -1 | -1 | -1 | -1 | 1 | -1 | 1 | 1 | 1 | -1 | 1 | 1 | 1 | 1 | -1 | 1 | -1 | -1 | -1 | -1 | -1 | 1 | -1 | 1 | -1 | -1 | 1 | -1 | 1 | 1 | -1 | 1 | 1 | -1 | 1 | 1 | 1 | 1 | -1 | -1 |
| $C_{ss,40,34}$ | 1 | -1 | -1 | -1 | 1 | -1 | -1 | 1 | -1 | 1 | 1 | 1 | 1 | 1 | 1 | 1 | 1 | 1 | 1 | -1 | 1 | -1 | 1 | -1 | 1 | -1 | -1 | -1 | -1 | 1 | -1 | -1 | -1 | -1 | -1 | -1 | 1 | 1 | -1 | 1 |
| $C_{ss,40,35}$ | -1 | -1 | 1 | 1 | -1 | -1 | -1 | 1 | 1 | -1 | -1 | 1 | 1 | -1 | 1 | 1 | -1 | 1 | -1 | -1 | 1 | 1 | 1 | 1 | 1 | 1 | 1 | -1 | -1 | -1 | -1 | -1 | -1 | 1 | 1 | -1 | -1 | 1 | 1 | -1 |
| $C_{ss,40,36}$ | -1 | 1 | 1 | 1 | 1 | 1 | -1 | 1 | 1 | -1 | -1 | 1 | -1 | 1 | -1 | -1 | 1 | 1 | -1 | -1 | 1 | 1 | -1 | -1 | 1 | -1 | -1 | 1 | 1 | -1 | -1 | -1 | -1 | -1 | 1 | 1 | 1 | -1 | -1 | 1 |
| $C_{ss,40,37}$ | 1 | -1 | 1 | -1 | 1 | -1 | -1 | -1 | 1 | -1 | -1 | -1 | 1 | -1 | 1 | -1 | -1 | -1 | -1 | 1 | 1 | -1 | -1 | 1 | 1 | 1 | -1 | 1 | 1 | 1 | 1 | -1 | 1 | -1 | 1 | -1 | 1 | 1 | -1 | 1 |
| $C_{ss,40,38}$ | -1 | -1 | 1 | -1 | 1 | 1 | 1 | -1 | -1 | 1 | -1 | -1 | -1 | 1 | -1 | 1 | -1 | 1 | -1 | 1 | -1 | 1 | 1 | 1 | 1 | -1 | -1 | -1 | -1 | 1 | 1 | -1 | -1 | 1 | 1 | 1 | -1 | 1 | -1 | 1 |
| $C_{ss,40,39}$ | -1 | -1 | 1 | -1 | -1 | 1 | -1 | -1 | 1 | -1 | -1 | 1 | -1 | 1 | 1 | 1 | 1 | -1 | 1 | 1 | 1 | 1 | -1 | -1 | -1 | -1 | -1 | -1 | 1 | 1 | -1 | 1 | 1 | 1 | -1 | -1 | -1 | 1 | 1 | 1 |

FIG 2

| Index list (L) | Index value m(i) of a slot i | | |
|---|---|---|---|
| | $i \bmod 3 = 0$ | $i \bmod 3 = 1$ | $i \bmod 3 = 2$ |
| 0 | 0 | 2 | 13 |
| 1 | 1 | 18 | 18 |
| 2 | 2 | 8 | 33 |
| 3 | 3 | 16 | 32 |
| 4 | 4 | 13 | 10 |
| 5 | 5 | 3 | 25 |
| 6 | 6 | 12 | 16 |
| 7 | 7 | 6 | 1 |
| 8 | 8 | 19 | 39 |
| 9 | 9 | 34 | 14 |
| 10 | 10 | 4 | 5 |
| 11 | 11 | 17 | 34 |
| 12 | 12 | 29 | 30 |
| 13 | 13 | 11 | 23 |
| 14 | 14 | 24 | 22 |
| 15 | 15 | 28 | 21 |
| 16 | 16 | 35 | 19 |
| 17 | 17 | 21 | 36 |
| 18 | 18 | 37 | 2 |
| 19 | 19 | 23 | 11 |
| 20 | 20 | 39 | 9 |
| 21 | 21 | 22 | 3 |
| 22 | 22 | 9 | 15 |
| 23 | 23 | 36 | 20 |
| 24 | 24 | 0 | 26 |
| 25 | 25 | 5 | 24 |
| 26 | 26 | 7 | 8 |
| 27 | 27 | 27 | 17 |
| 28 | 28 | 32 | 29 |
| 29 | 29 | 15 | 38 |
| 30 | 30 | 30 | 12 |
| 31 | 31 | 26 | 7 |
| 32 | 32 | 20 | 37 |
| 33 | 33 | 1 | 35 |
| 34 | 34 | 14 | 0 |
| 35 | 35 | 33 | 31 |
| 36 | 36 | 25 | 28 |
| 37 | 37 | 10 | 27 |
| 38 | 38 | 31 | 4 |
| 39 | 39 | 38 | 6 |

FIG. 3

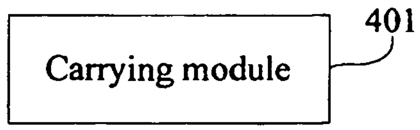


FIG. 4

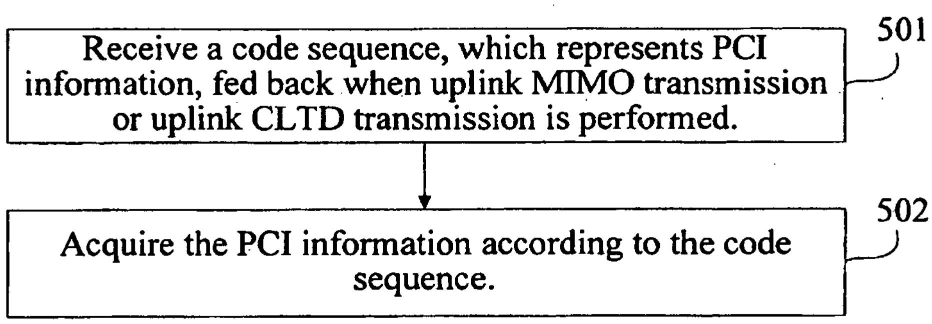


FIG. 5

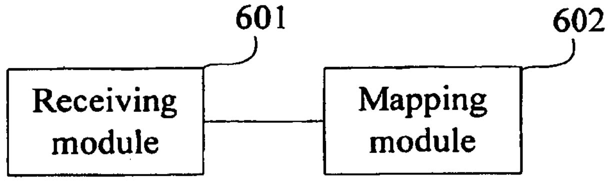


FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070002963 A1